# FASCICULE DE BREVET EUROPEEN

(11) **EP 0 425 352 B1**
(45) Date de publication et mention de la délivrance du brevet: **28.12.1994**
(21) Numéro de dépôt: 90402949.3
(22) Date de dépôt: 19.10.1990
(51) Int. Cl.: F16F 15/00, G05D 19/02

(54) **Dispositif d'amortissement actif de vibrations**
Vorrichtung zur aktiven Dämpfung von Schwingungen
Device for the active damping of vibrations

(30) Priorité: 20.10.1989 FR 8913780
(43) Date de publication de la demande: 02.05.1991
(73) Titulaire: MATRA CAP SYSTEMES, 78140 Velizy-Villacoublay (FR)
(72) Inventeur: Paillard, Jean, F-78990 Elancourt (FR)
(74) Mandataire: Fort, Jacques

(56) Documents cités:
- EP-A- 0 157 693
- EP-A- 0 291 931
- US-A- 3 731 526
- US-A- 4 395 904
- PATENT ABSTRACTS OF JAPAN vol. 11, no. 48 (M-561)(2495) 13 février 1987,
- & JP-A-61 211548 (TECH RES & DEV INST OF JAPAN DEF AGENCY) 19septembre 1986,
- PATENT ABSTRACTS OF JAPAN vol. 10, no. 372 (M-544)(2429) 11 décembre 1986,& JP-A-61 165042 (MITSUBISHI HEAVY IND LTD) 25 juillet 1986,
- TRANSACTIONS OF THE INSTITUTE OF MEASUREMENT AND CONTROL. vol. 7, no. 3, juin1985, DORKING GB pages 133 - 137; J.R.Jordan et al.: "An approximate spectrumanalyser"
- PATENT ABSTRACTS OF JAPAN vol. 8, no. 208 (P-302)(1645) 21 septembre 1984,& JP-A-59 92362 (MITSUBISHI DENKI KK) 28 mai 1984,
- ELECTRONIQUE APPLICATIONS. no. 62, novembre 1988, PARIS FR pages 35 - 43; E.W.McCune: "S.N.D.: un oscillateur numérique modulable"
- NASA Tech Brief "Control System Damps Vibrations"
- "Minimisation of Helicopter Vibration through Active Control of Structural Response", S.P. King et A.E. Staple, AGARD Conference Proceedings N 423, Ed. SPS Ltd., juin 1987, pages 14-1 à 14-13
- et GB-A-2 160 840

## Description

L'invention concerne les dispositifs d'amortissement actif des vibrations d'organes mécaniques-dont l'énergie de vibration est concentrée à quelques fréquences comportant un fondamental et des harmoniques qui restent dans un rapport constant.

Ce mode de vibration se rencontre fréquemment, notamment sur beaucoup d'organes tournants, tels que des arbres de transmission de puissance mécanique qui sont la source de vibrations à des fréquences harmoniques qui varient en fonction de la vitesse de l'arbre mais restent dans un rapport constant.

On connaît déjà de nombreux dispositifs d'amortissement actif de vibrations. Certains fonctionnent en mettant en oeuvre des algorithmes faisant intervenir uniquement le temps et par conséquent imposent un même rythme à l'acquisition des données représentatives des vibrations et à la génération de consignes d'actionneurs de réduction de niveau vibratoire, ce qui tend à rendre le dispositif instable.

On connait également un type de dispositif d'amortissement actif de vibrations comprenant des capteurs fournissant chacun un signal de mesure électrique représentatif, en amplitude et en phase, de la vibration à un emplacement de l'organe, au moins un actionneur capable d'exercer sur l'organe une force ou un couple contrariant la vibration, et une unité de calcul et d'alimentation de l'actionneur, reliée aux capteurs et à l'actionneur. L'unité de calcul fournit à l'actionneur un signal de mise en oeuvre élaboré pour minimiser l'énergie de vibrations, déterminée à partir des signaux de mesure provenant des capteurs. Dans ces dispositifs connus la fonction de transfert de l'unité de calcul est une matrice dont les termes sont préétablis, en fonction de résultats d'essais, et figés.

De tels dispositifs ne peuvent suivre l'évolution dans le temps d'un système pour s'y adapter.

On connaît des dispositifs similaires, dont le nombre d'actionneurs est égal au nombre de capteurs, afin que l'organe de calcul ait une matrice de transfert carrée, ce qui constitue une limitation souvent gênante (instabilité, contrôle local et non global).

Dans certains dispositifs (voir "Minimisation of Helicopter Vibration through Active Control of Structural Response", par S.P. King et A.E Staple, AGARD Conference Proceedings N° 423, Ed. SPS Ltd, juin 1987, pages 14-1 à 14-13), la minimisation des vibrations est effectuée pour une seule fréquence considérée comme dominante, l'unité de calcul mettant en oeuvre un algorithme adaptatif récursif.

La présente invention vise à fournir un dispositif d'amortissement actif du type ci-dessus défini, répondant mieux que ceux antérieurement connus aux exigences de la pratique. Elle vise notamment à réaliser un dispositif permettant de s'adapter à l'évolution dans le temps du système contenant l'organe mécanique dont les vibrations sont à atténuer, n'exigeant pas une détermination préalable des coefficients de la matrice et permettant de prendre en compte les vibrations en un nombre d'emplacements élevé.

Dans ce but l'invention propose un dispositif tel que défini dans la revendication 1.
le nombre de capteurs est au moins égal à celui des actionneurs pour éviter la nécessité d'un choix par l'unité de calcul entre plusieurs solutions possibles et donnant des résultats équivalents, provoqué par diverses solutions dans l'inversion de la matrice de transfert par l'unité de calcul.

L'invention trouve une application dans tous les systèmes industriels où il est souhaitable d'amortir les vibrations apparaissant à des fréquences identifiables, éventuellement du fait qu'elles sont directement liées à une fréquence mesurable.

On peut notamment citer les machines tournantes, les pompes, les ventilateurs, les moteurs à combustion interne. Le but recherché peut notamment être d'accroitre la fiabilité du système, de réduire le bruit et/ou d'obtenir la furtivité acoustique.

L'invention sera mieux comprise à la lecture de la description qui suit d'un mode particulier de réalisation, donné à titre d'exemple non limitatif. La description se réfère aux dessins qui l'accompagnent, dans lesquels :
- la figure 1 est un schéma synoptique montrant les différentes fonctions qui interviennent dans la mise en oeuvre du dispositif ;
- la figure 2 est un synoptique d'un synthétiseur de fréquences utilisable dans le dispositif, de la figure 1 ;
- la figure 3 est un schéma synoptique entrant une constitution possible d'un mélangeur de signaux utilisable dans le dispositif de la figure 1.
- la figure 4 montre une répartition possible des composants du dispositif suivant l'invention.

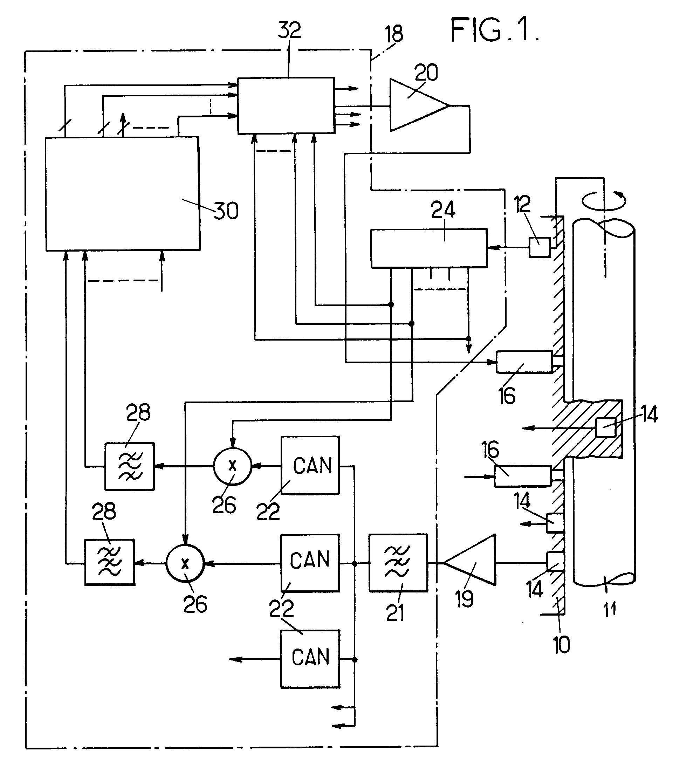

Le dispositif sera décrit dans son application à l'amortissement dynamique actif des vibrations discrètes d'une structure vibrante constituée par un organe tournant. La figure 1 montre un tel organe tournant, constitué par un arbre 11.

Les signaux d'entrée du dispositif comprennent d'une part un signal de synchronisation fourni par un capteur de vitesse 12, fournissant par exemple une impulsion chaque fois qu'il se trouve face à des emplacements déterminés de l'arbre 11, d'autre part C signaux électriques fournis chacun par un capteur 14 et représentant les déplacements dus aux vibrations à l'emplacement où est situé le capteur sur le stator 10.

Les signaux de sortie du dispositif sont appliqués à des actionneurs électrodynamiques 16, qui peuvent être constitués par des pots vibrants, dont le nombre A est inférieur ou au plus égal à celui des capteurs C, agissant sur la structure vibrante en des points qui peuvent en général être définis par le calcul et ajustés ensuite par expérimentation, de façon à obtenir un résultat optimum. Pour plus de simplicité, seul sont représentées sur la figure 1 les liaisons d'un seul actionneur et d'un seul capteur.

Le dispositif d'amortissement comporte de plus un ensemble 18 de traitement de signal et de commande des actionneurs qui reçoit les signaux d'entrée par l'intermédiaire d'amplificateurs de charge 19 et fournit les signaux de sortie. Cet ensemble 18 est prévu pour amortir les vibrations à des fréquences particulières, par un asservissement en boucle fermée. Ces fréquences particulières sont en règle générale des fréquences de résonance, constituées par des harmoniques d'une fréquence fondamentale f que le capteur de synchronisation 12 permet d'obtenir.

Le bloc 18 peut être regardé comme assurant trois fonctions :
- l'extraction des composantes du spectre du signal de chacun des capteurs 14, à chacune des fréquences à amortir,
- le calcul de la matrice de transfert actionneurs/capteurs par recherche du minimun de la somme des énergies des capteurs 14 à chaque fréquence obtenu, par dêmodulation et filtrage numérique à réponse impulsionnelle infinie,
- la génération, par mélange de signaux analogiques, des signaux de sortie appliqués à chaque actionneur 16 par l'intermédiaire d'amplificateurs de puissance 20.

Pour réaliser ces fonctions, l'ensemble 18 doit réaliser la synthèse 24 de signaux périodiques, généralement sinusoïdaux, synchrones du signal périodique fourni par le capteur de vitesse 12.

L'extraction des composantes s'effectue en soumettant le signal de sortie de chaque capteur 14, porté à un niveau suffisant par l'amplificateur 19 correspondant, à un filtrage passe-bas anti-repliement 21 et à échantillonnage et conversion analogique-numérique 22 à une cadence suffisamment élevée en regard de chacune des fréquences synthétisées ; les échantillons sont soumis à une démodulation synchrone qui implique une multiplication 26 et un filtrage passe-bas 28 pour chaque fréquence retenue.

La matrice de transfert est calculée de façon récursive par algorithmie adaptative à l'aide d'un calculateur 30. Etant donné que les caractéristiques des vibrations ne changent que lentement, l'algorithmie peut notamment être celle décrite dans le chapitre "Moindres Carrés Récursif à paramètres lentement variables de l'ouvrage "Le Filtrage et ses Applications" par LABARRERE, GIMONET et KRIEF (ISBN 2.85428.190.X).

L'inversion de la matrice de transfert entre actionneurs 16 et capteurs 14 permet de déterminer les coefficients de pondération à utiliser pour générer, par mélange 32 de contributions pondérées des signaux sinusoïdaux synthétisés en 24, des ondes périodiques d'amplitude et de phase réglables qui sont appliquées aux actionneurs 16 par l'intermédiaire des amplificateurs 20.

On décrira maintenant une constitution possible des différents composants du dispositif.

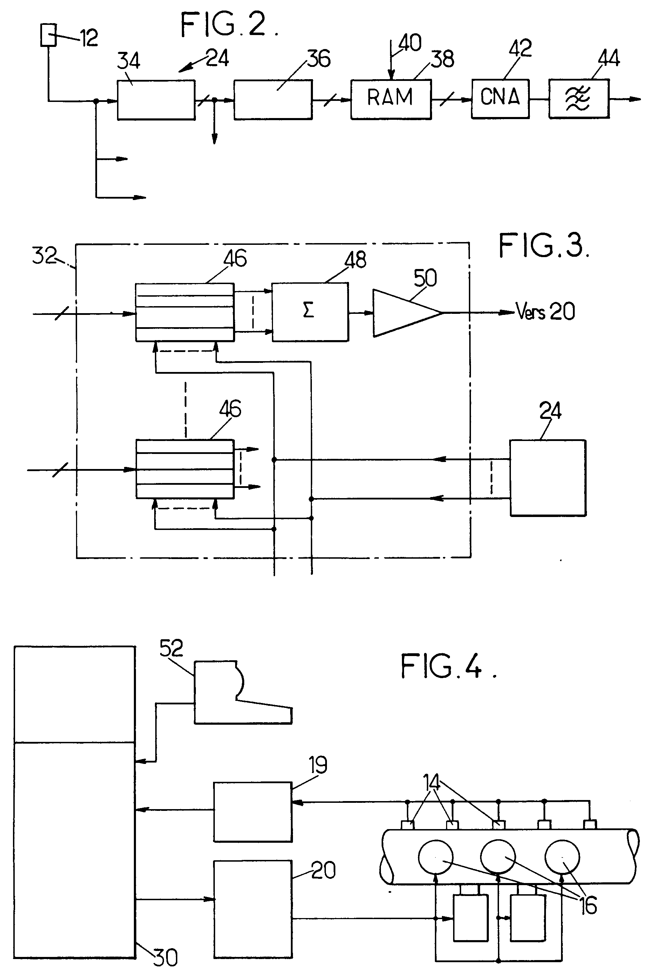

Comme on l'a indiqué plus haut, la mise en oeuvre du dispositif exige de disposer d'ondes périodiques, généralement sinusoïdales, aux fréquences à amortir. Ces fréquences sont des fractions rationnelles d'une fréquence fondamentale, liée à la vitesse de rotation de la structure vibrante, lorsque cette dernière est constituée par un organe rotatif. La figure 2 montre un synthétiseur permettant de générer des ondes périodiques de forme quelconque, à fréquence (n/m) f0. Le synthétiseur 24 de la figure 1 reçoit en entrée un signal 12 carré, à fréquence multiple de la vitesse de rotation et servant de référence. Ce signal 12 attaque un compteur programmable 34 fournissant un signal de sortie, à une cadence égal à(1/m)la fréquence du signal carré d'entrée, à un générateur d'adresses 36. Ce générateur attaque l'entrée de lecture d'une mémoire vive 38 dans laquelle la forme d'onde est mémorisée sous forme d'échantillons, programmable par une entrée 40. La sortie de la table 38 est appliquée à un convertisseur numérique-analogique 42 dont les échantillons de sortie sont appliqués à un filtre passe-bas 44 dont la sortie fournit l'onde synthétisée.

Le synthétiseur 24 qui vient d'être décrit fournit plusieurs formes d'ondes en cohérence de phase avec le signal de pilotage fourni par le capteur de vitesse 12. Mais un dispositif de multiplexage peut être prévu pour permettre à volonté soit un pilotage externe, soit un pilotage à partir d'une horloge interne, soit encore un pilotage à partir du bus d'un organe de calcul.

Dans le dispositif selon l'invention, les ondes fournies par le synthétiseur 24 sont utilisées sous forme numérique pour la démodulation synchrone, effectuée à une cadence d'échantillonnage au moins deux fois plus élevée que l'harmonique de l'organe rotatif le plus haut dans le spectre, afin de respecter le théorème de Shannon.

A titre d'exemple, on peut indiquer qu'un synthétiseur de formes d'ondes fournissant 8 formes d'onde distinctes à des fréquences ayant une valeur quelconque (n/m)f, avec m≦256 et n≦127 a été réalisé, en utilisant un générateur d'adresses 36 fournissant une adresse sur 11 bits (c'est-à-dire permettant un échantillonnage des formes d'ondes sur 2 048 points) et une mémoire vive mémorisant chaque échantillon sur 12 bits, avec un signal de synchronisation externe sur 11 bits (2048 tops/tour).

Le filtrage passe-bas était assuré par un bloc filtreur-amplificateur ayant une tension maximale de sortie de ± 10 volts.

La démodulation synchrone à chacune ces fréquences peut s'effectuer, de façon classique, à l'aide d'un multiplieur numérique 26 et d'un filtre passe-bas 28 qui extrait l'amplitude et la phase du spectre de chaque capteur, chaque fois pour une fréquence synthétisée respective. Souvent, sauf pour des systèmes très complexes, un amortissement pour quatre fréquences synthétisées est suffisant.

Une variante consiste à effectuer non pas une démodulation synchrone du signal d'un capteur, mais une combinaison linéaire des résultats des démodulations synchrones, par multiplication par la même forme d'onde, de plusieurs capteurs.

Le traitement 30 peut être effectué par un calculateur parallèle programmé de façon à calculer de façon récursive la matrice de transfert entre actionneurs et capteurs, par minimisation de l'erreur entre (a) les valeurs fournies par les capteurs, après démodulation, (b) le transfert estimé des signaux actionneurs et de l'estimation de l'excitation vibratoire de l'organe rotatif. L'utilisation d'un algorithme tel que celui défini plus haut et dont la programmation sur un organe de calcul particulier ne pose pas de problème particulier tient compte des évolutions dans le temps de la matrice de transfert et permet de pondérer, selon une loi de décroissance exponentielle en fonction du temps, la contribution de chaque itération de l'algorithme.

L'organe de calcul 30 fournit, en sortie, pour chacun des A actionneurs, des coefficients de pondération en nombre égal à celui des fréquences pour lesquels l'amortissement doit être réalisé (c'est-à-dire en nombre égal à celui des ondes fournies par le synthétiseur 24). Ces coefficients sont appliqués au mélangeur 32, comportant un nombre de sorties égal à celui des actionneurs.

Le mélangeur 32 peut avoir la constitution de principe montrée en figure 3. Il comprend des blocs 46 de convertisseurs numériques-analogiques comportant chacun un nombre de convertisseurs égal à celui des formes d'onde générées par le synthétiseur 24. Chaque bloc 46 est affecté à un actuateur 16 particulier. Chaque convertisseur d'un même bloc 46 reçoit l'une des formes d'onde générées par le synthétiseur 24 et fournit, sur sa sortie, un signal analogique qui est le produit de la forme d'onde par le coefficient de pondération respectif, fourni par l'unité de calcul 30. Les sorties d'un bloc 46, qui sont constituées par les contributions du signal d'amortissement pour une même fréquence, sont appliquées à un sommateur 48 dont la sortie attaque un amplificateur de filtrage 50. Le signal ainsi généré est appliqué à l'amplificateur de puissance de l'actuateur approprié.

On décrira maintenant, en faisant référence à la figure 4 où les éléments correspondant à des fonctions décrites sont désignés par le même numéro de référence, une architecture possible du dispositif.

Le volume de calcul et la nécessité d'acquisition en temps réel de plusieurs paramètres physiques vibratoires rend préférable une architecture permettant une exécution en parallêle des tâches. Une solution avantageuse consiste à utiliser une unité de calcul comportant un serveur de calcul parallêle servant également d'interface entre plusieurs bus de type VME, dont la nature permet une évolution. On peut notamment utiliser le serveur "capitan" décrit dans la communication de G. GAILLAT "le calculateur parallèle capitan : 600 MIPS pour l'imagerie temps réel", Biarritz, mai 1984, et dans le document FR-A-2 571 567. Le serveur comprend un bus en anneau permettant une messagerie asynchrone à débit élevé. Les différents composants énumérés plus haut, ainsi qu'un organe d'entrée-sortie 52 constituant l'interface utilisateur, sont couplés aux bus VME.

En particulier, chaque fonction d'échantillonnageblocage peut être réalisée par une carte séparée de celle réalisant la conversion et recevant l'ordre de blocage provenant d'une horloge interne ou externe à la carte d'échantillonnage-blocage. Une interface peut être prévue pour autoriser la commande de blocage à partir d'impulsions générées par un autre composant de l'unité de calcul et transférée par le bus. La carte portant les circuits échantillonneurs-bloqueurs nécessaires contient un bloc d'alimentation stabilisée propre. Le synthétiseur 24 peut être prévu pour être programmable par l'intermédiaire du bus ou d'un des bus VME. Ces mêmes bus sont utilisables pour amener les valeurs de coefficient et/ou les formes d'onde au mélangeur 32.

L'invention est encore susceptible de nombreuses variantes de réalisation ; par ailleurs, certains des composants originaux mis en oeuvre dans le dispositif sont utilisables pour d'autres applications. Par exemple le synthétiseur trouve de nombreuses applications dans les techniques du traitement du signal, du fait qu'il garantit l'absence de dérive de phase permet de générer une forme d'onde quelconque, a un excellent rapport signal à bruit et une très faible distorsion.

## Revendications

1. Dispositif d'amortissement actif des vibrations d'organes mécaniques dont l'énergie de vibration est concentrée à des fréquences comportant un fondamental et des harmoniques qui restent dans un rapport constant, comprenant des capteurs (14) fournissant chacun un signal de mesure électrique représentatif, en amplitude et en phase, de la vibration à un emplacement de l'organe, au moins un actionneur (16) capable d'exercer sur l'organe une force ou un couple contrariant la vibration, et une unité de calcul et d'alimentation de l'actionneur, reliée aux capteurs et à l' actionneur, mettant en oeuvre un algorithme d'adaptation récursif, **caractérisé en ce qu**'il comporte des moyens (22,26,28) pour soumettre les signaux de sortie de chacun des capteurs à une détection synchrone à l'aide de signaux de référence correspondant aux différentes fréquences de concentration d'énergie, ces signaux de référence étant élaborés à partir d'un même signal ayant une relation linéaire avec la fréquence du fondamental de façon à avoir une relation de phase invariable, et en ce que l'unité de calcul (30) met en oeuvre un algorithme d'adaptation récursif pour chaque fréquence à laquelle l'énergie est concentrée, l'actionneur ou chaque actionneur (16) recevant un signal qui lui est propre et qui est la somme de contributions élaborées par l'unité de calcul (30) pour les différentes fréquences.

2. Dispositif selon la revendication 1, caractérisé en ce que le nombre de capteurs (14) est au moins égal à celui des actionneurs (16).

3. Dispositif selon la revendication 1 ou 2, caractérisé en ce qu'il comprend également un capteur de synchronisation (12) et un synthétiseur (24) de plusieurs formes d'onde périodique, en général sinusoïdale, aux dites fréquences de concentration d'énergie.

4. Dispositif selon la revendication 3, caractérisé en ce que le synthétiseur comporte au moins une table de formes d'onde constituée par une mémoire (38) adressable et un compteur incrémenté par des impulsions à fréquences proportionnelles à la fondammentale de l'organe rotatif (12).

5. Dispositif selon la revendication 3 ou 4, caractérisé en ce que les moyens pour soumettre les signaux de sortie des capteurs à une détection synchrone comprennent des moyens (22) d'échantillonnage des formes d'onde et des signaux fournis par les capteurs, un multiplieur (26) des échantillons de la forme d'onde correspondante et des échantillons numérisés du signal de sortie d'un capteur (14).

6. Dispositif selon l'une quelconque des revendications précédentes, caractérisé en ce qu'il comprend, pour chaque actionneur (16), des convertiseurs numériques-analogiques en nombre égal à celui des fréquences de concentration, chacun des dits convertisseurs faisant le produit de la forme d'onde respective et d'un coefficient fourni par l'unité de calcul, et un sommateur (48) des contributions pour les différentes fréquences.

7. Dispositif selon l'une quelconque des revendications précédentes, caractérisé en ce que l'unité de calcul (30) est programmée pour déterminer l'énergie à appliquer, pour chacune des fréquences de contribution, à chacun des actionneurs, par un algorithme de recherche des moindres carrés des énergies fournies par l'ensemble des capteurs.

## Claims

1. A device for the active damping of the vibrations of mechanical members whose vibratory energy is concentrated at frequencies comprising a fundamental and harmonics which remain in a constant ratio, the device comprising sensors (14) each delivering an electric measuring signal representing in amplitude and phase the vibration at a location on the member; at least one actuator (16) able to exert a vibration-counteracting force or torque on the member; and a computing and supply unit which is associated with the actuator and which is connected to the sensors and the actuator and uses a recursive adaptation algorithm, characterized in that it comprises means (22, 26, 28) for subjecting the output signals of each of the sensors to a synchronous detection by means of reference signals corresponding to the different energy concentration frequencies, said reference signals being derived from an identical signal having a linear relation with the frequency of the fundamental so as to have an invariable phase relation, and the computing unit (30) uses a recursive adaptation algorithm for each frequency at which the energy is concentrated, the or each actuator (16) receiving a signal which is specific thereto and which is the sum of contributions derived by the computing unit (30) for the different frequencies.

2. A device according to Claim 1, characterized in that the number of sensors (14) is at least equal to the number of actuators (16).

3. A device according to Claims 1 or 2, characterized in that it also comprises a synchronisation sensor (12) and a synthesiser (24) of a number of periodic, generally sinusoidal wave shapes at said energy concentration frequencies.

4. A device according to Claim 3, characterized in that the synthesiser comprises at least one table of wave shapes formed by an addressable memory (38) and a counter incremented by pulses of frequencies proportional to the fundamental of the rotary member (12).

5. A device according to Claim 3 or 4, characterized in that the means for subjecting the output signals of the sensors to a synchronous detection comprise means (22) for sampling the wave shapes and signals supplied by the sensors, a multiplier (26) of the samples of the corresponding wave shape and the digitalised samples of the output signal of one sensor (14).

6. A device according to any of the preceding Claims, characterized in that it comprises for each actuator (16), digital-to-analogue converters in a number equal to that of the concentration frequencies, each of said converters giving the product of the respective wave shape and a co-efficient supplied by the computer unit, and an adder (48) of the contributions for the different frequencies.

7. A device according to any of the preceding Claims, characterized in that the computing unit (30) is programmed to determine the energy to be applied for each of the contribution frequencies to each of the actuators, by an algorithm for finding the least squares error of the energies supplied by the assembly of sensors.

## Patentansprüche

1. Vorrichtung zur aktiven Dämpfung von Schwingungen von mechanischen Teilen, deren Vibrationsenergie auf Frequenzen konzentriert ist, die eine Grundfrequenz und Harmonische umfassen, welche in einem konstanten Verhältnis stehen, umfassend Sensoren (14), die jeweils ein elektrisches Signal ausgeben, das in Amplitude und Phase die Vibration an einer Stelle des Teils wiedergibt, mindestens ein Betätigungselement (16), das auf das Teil eine der Vibration entgegenwirkende Kraft oder ein Kraftmoment ausüben kann, und eine Einrichtung zum Rechnen und Versorgen des Betätigungselementes, die mit den Sensoren und dem Betätigungselement verbunden ist und einen rekursiven Adaptionsalgorithmus durchführt, **dadurch gekennzeichnet, daß** sie eine Einrichtung (22, 26, 28) umfaßt zum Unterwerfen der Ausgangssignale jedes Sensors unter eine synchrone Detektion mit Hilfe von Bezugssignalen entsprechend den verschiedenen Frequenzen der Energiekonzentration, wobei die Bezugssignale auf der Basis eines gleichen Signals erstellt wurden, das eine lineare Beziehung mit der Grundfrequenz in der Art einer Beziehung mit invariabler Phase hat, und daß die Recheneinrichtung (30) einen rekursiven Adaptionsalgorithmus durchführt für jede Frequenz, auf welche die Energie konzentriert ist, wobei das Betätigungselement oder jedes Betätigungselement (16) ein Signal empfängt, das ihm eigen ist und das die Summe von der Recheneinrichtung (30) ausgewerteten Beiträge für die verschiedenen Frequenzen ist.

2. Vorrichtung nach Anspruch 1, **dadurch gekennzeichnet**, daß die Anzahl der Sensoren (14) mindestens gleich derjenigen der Betätigungselemente (16) ist.

3. Vorrichtung nach Anspruch 1 oder 2, **dadurch gekennzeichnet**, daß sie ebenso einen Synchronisationssensor (12) und einen Synthetisator (24) für mehrere Formen von periodischen, im allgemeinen sinusförmigen Wellen der Frequenzen der Energiekonzentration umfaßt.

4. Vorrichtung nach Anspruch 3, **dadurch gekennzeichnet**, daß der Synthetisator mindestens eine Wellenformentabelle umfaßt, die durch einen adressierbaren Speicher (38) und einen Zähler, der durch Impulse mit Frequenzen proportional zur Grundfrequenz des rotierbaren Teils (12) getaktet wird, gebildet wird.

5. Vorrichtung nach Anspruch 3 oder 4, **dadurch gekennzeichnet**, daß die Einrichtung zur Unterwerfung der Ausgangssignale der Sensoren unter eine synchrone Detektion eine Einrichtung (20) zur Abtastung der Wellenformen und der Signale, die von den Sensoren geliefert werden, und einen Multiplikator (26) für die Abtastungen der entsprechenden Wellenform und die digitalisierten Abtastungen des Ausgangssignals eines Sensors (14) umfaßt.

6. Vorrichtung nach einem der vorangegangenen Ansprüche, **dadurch gekennzeichnet**, daß sie für jedes Betätigungselement (16) Digital/Analog-Wandler in gleicher Anzahl zur Anzahl der Konzentrationsfrequenzen, wobei jeder der Wandler das Produkt einer jeweiligen Wellenform und eines Koeffizienten erstellt, der von der Recheneinrichtung geliefert wird, und einen Summierer (48) für die Beiträge der verschiedenen Frequenzen umfaßt.

7. Vorrichtung nach einem der vorangegangenen Ansprüche, **dadurch gekennzeichnet, daß** die Recheneinrichtung (30) programmiert ist, um die an jedem der Betätigungselemente anzuwendenden Energie für jede der Beitragsfrequenzen mittels eines Suchalgorithmus der kleinsten Quadrate der Energien zu bestimmen, welche von der Gesamtheit der Sensoren geliefert werden.
